# EUROPÄISCHE PATENTSCHRIFT

(11) **EP 2 811 934 B1**
(45) Veröffentlichungstag und Bekanntmachung des Hinweises auf die Patenterteilung: **21.09.2022**
(21) Anmeldenummer: 13704397.2
(22) Anmeldetag: 06.02.2013
(51) Int. Cl.: A61C 8/00

(54) **IMPLANTAT, INSBESONDERE DENTALIMPLANTAT**
IMPLANT, IN PARTICULAR DENTAL IMPLANT
IMPLANT, NOTAMMENT IMPLANT DENTAIRE

(30) Priorität: 06.02.2012 DE 102012002112
(43) Veröffentlichungstag der Anmeldung: 17.12.2014
(73) Patentinhaber: Nature Implants GmbH, 61231 Bad Nauheim (DE)
(72) Erfinder: ARNOLD, Robert, 61239 Ober-Mörlen (DE); EISENKOLB, Reiner, 35516 Münzenberg (DE); ARNOLD, Thomas, 35519 Rockenberg (DE); ARNOLD, Martin, 35519 Rockenberg (DE)
(74) Vertreter: Walkenhorst, Andreas
(86) Internationale Anmeldenummer: PCT/EP2013/052333
(87) Internationale Veröffentlichungsnummer: WO 2013/117594

(56) Entgegenhaltungen:
- EP-A2- 1 112 722
- EP-A2- 1 444 964
- WO-A1-2004/103202
- US-A1- 2009 233 256
- US-A1- 2011 070 558

## Beschreibung

Die Erfindung betrifft ein Implantat mit einem in einen Knochen einbringbaren Pfostenteil und besonders bevorzugt ein Dentalimplantat mit einem in einen Kieferknochen einbringbaren Pfostenteil und mit einem diesem zugeordneten Aufbauteil, an das ein Zahnersatzstück anbringbar ist.

Implantate und insbesondere Dentalimplantate sind in vielfältigen Formen bekannt. Dentalimplantate werden üblicherweise anstelle eines extrahierten oder ausgefallenen Zahnes in den Kieferknochen eingesetzt, um dort nach einer Einheilphase von drei bis vier Monaten ein als Zahnersatz dienendes prothetisches Teil oder eine Krone zu halten. Dazu ist ein derartiges Dentalimplantat üblicherweise als geeignet geformter Metallkörper ausgebildet, wobei das Pfostenteil üblicherweise durch Einschrauben an der vorgesehen Stelle in den Kieferknochen eingesetzt wird. Das Pfostenteil weist dabei in der Regel am apikalen Ende ein zumeist selbstschneidendes Schraubengewinde auf, mit welchem das Pfostenteil in das entsprechend präparierte Implantatbett eingesetzt wird. Allgemein können Implantate beispielsweise als Knochenimplantate ebenfalls mit derartigen Pfostenteilen versehen sein, die durch Einschrauben in den jeweiligen Knochen inseriert werden können.

USRE37646E, WO2004/103202 und US2009/233256 offenbaren Dentalimplantate mit einem in einen Knochen einbringbaren Pfostenteil, wobei das Pfostenteil ein Gewinde umfasst.

Ein Dentalimplantat der genannten Art ist üblicherweise einteilig aufgebaut, kann aber auch zweiteilig aufgebaut sein, und umfasst das zur Einbringung in den Kieferknochen vorgesehene Pfostenteil und ein zugeordnetes Aufbauteil, an das das als Prothese oder dergleichen vorgesehene Zahnersatzstück anbringbar ist. Das Pfostenteil und ebenso das Kopf- oder Aufbauteil bestehen üblicherweise aus Metall oder einer Keramik, und zwar insbesondere aus Titan, Zirkon, einer Titanlegierung, Zirkonlegierung, einer titanhaltigen Legierung, einer zirkonhaltigen Legierung, einer Zirkonoxid-AluminiumoxidKeramik oder einer Keramik, die entweder Zirkonoxid oder Aluminiumoxid beinhaltet oder mindestens eine der Keramiken als Hauptbestandteil aufweist. Darüber hinaus können Keramiken eingesetzt werden, die auf Silizium- oder Siliziumoxidbasis aufgebaut sind und z. B. Stickstoff, Wasserstoff, Kohlenstoff oder Wolfram beinhalten. Das Pfostenteil ist an seiner Außenseite üblicherweise mit einem Gewinde versehen, welches als selbstschneidendes oder auch als nicht selbstschneidendes Gewinde ausgeführt sein kann. Das Pfostenteil wird üblicherweise in einem entsprechend aufbereiteten Implantatbett des Kieferknochens verankert. Die Konstruktion des im Außenbereich des Pfostenteils vorgesehenen Gewindes ist dabei üblicherweise für eine hohe Primärstabilität der Anordnung und eine gleichmäßige Weiterleitung der bei der Kaubelastung des Dentalimplantats auftretenden Kräfte in den Kieferknochen ausgelegt.

Das Aufbauteil, das an seinem oberen Bereich mit einer Krone, einer anderen prothetischen Versorgung oder dergleichen in an sich bekannter Weise ausgestattet wird, schließt an das Pfostenteil an bzw. wird in der zweiteiligen Ausführung über eine geeignet gewählte Verbindungsschraube mit dem Pfostenteil verschraubt.

Im Hinblick auf die bei der Kaubelastung auftretenden Kräfte und die gewünschte Langlebigkeit bei der Verwendung eines derartigen Dentalimplantats ist die mechanische Stabilität der Anordnung gegenüber verschiedenartigen Belastungen von besonderer Bedeutung. Dabei ist der schnelle und sichere Sitz des Pfostenteils im Implantatbett bzw. im Kieferknochen auch unter Kaubelastung des Dentalimplantats besonders wichtig.

Der Erfindung liegt daher die Aufgabe zu Grunde, ein Implantat, vorzugsweise ein Dentalimplantat, der oben genannten Art anzugeben, welches im Rahmen eines minimalinvasiven Eingriffs besonders stabil und kippsicher im Knochen eingebracht werden kann.

Diese Aufgabe wird erfindungsgemäß gelöst, indem das Pfostenteil ein Gewinde umfasst, das in zumindest einem Gewindeabschnitt als Tellergewinde ausgeführt ist, bei dem mindestens eine der Gewindeflanken eine Flankentiefe aufweist, die mindestens um das 1,25-fache, bevorzugt um etwas das 2-fache, größer ist als die durch die Höhe der zugeordneten Stirnfläche gegebene Flankenhöhe, und bei dem die apikalseitige Gewindeflanke in diesem Gewindeabschnitt im Wesentlichen senkrecht zur Längsachse des Pfostenteils ausgerichtet ist.

Die Erfindung geht dabei von der Überlegung aus, dass die gewünschte Stabilität des Implantats dann erreicht werden kann, wenn das im Bereich der Gewindeflanken aufgebaute Knochenmaterial einen besonders hohen Widerstand gegen Längsbewegungen, insbesondere in koronaler Richtung, liefern kann. Ein derart besonders hoher Widerstand lässt sich dann erreichen, wenn die Kraftkomponenten des durch das Knochenmaterial aufgebauten Druckes auf die Gewindeflanken im Wesentlichen senkrecht zu dieser stehen. Dies wird dann ermöglicht, wenn zumindest in einem Abschnitt des am Pfostenteil befindlichen Gewindes die koronalseitigen Gewindeflanken im Wesentlichen senkrecht zur Längsachse des Pfostenteils stehen.

Für einen besonders sicheren Sitz des Dentalimplantats sind neben den koronalseitigen Gewindeflanken auch die apikalseitigen Gewindeflanken in dem genannten Gewindebereich im Wesentlichen senkrecht zur Längsachse des Pfostenteils ausgebildet. Durch eine derartige beidseitige, senkrechte Ausführung der Gewindeflanken wird nicht nur ein besonders sicherer Sitz gegen ein Herausfallen des Dentalimplantats geliefert, sondern auch eine Verschiebung des Dentalimplantats in apikaler Richtung, beispielsweise durch Kaubelastungen, verringert. Für eine besonders einfache, präzise und kostengünstige Herstellung des Dentalimplantats ist in vorteilhafter Ausgestaltung die Stirnseite des Gewindeprofils in diesem Gewindebereich parallel zur Längsachse des Pfostenteils ausgeführt. Somit lässt sich das Gewindeprofil besonders einfach aus einem beispielsweise zylindrischen Körper herstellen. Im Falle einer zur Längsachse des Pfostenteils senkrecht stehenden apikalen und koronalen Gewindeflanke ergibt sich somit ein Winkel zwischen der Stirnseite des Gewindeprofils und den Gewindeflanken von ebenfalls etwa 90°. Das Gewinde entspricht somit je nach Ausdehnung der Gewindeflanken einem Flach- oder Tellergewinde. Zumindest in einem Gewindeabschnitt des Gewindes sollte dabei das Verhältnis der Flankentiefe zu der Flankenhöhe deutlich größer als 1, bevorzugt mindestens 1,5, besonders bevorzugt etwa 2 oder größer und das Gewinde in diesem Gewindeabschnitt somit als so genanntes "Tellergewinde" ausgeführt sein. Ein Tellergewinde im hier verwendeten Sinne ähnelt dabei in der geometrischen Grundform zwar einem Flachgewinde und weist wie dieses zwei im Wesentlichen parallel zueinander verlaufende Gewindeflanken auf, verfügt aber über ein deutlich erhöhtes Verhältnis der Flankentiefe zur Flankenhöhe. Ein derart ausgeführtes Gewinde ist aufgrund der flachen Stirnseite des Gewindeprofils zusätzlich besonders kippstabil, und Brüche der Gewindeflanken können im Vergleich zu einem Spitzgewinde aufgrund der höheren Materialdicke am Flankenende besonders gut vermieden werden.

Für einen besonders hohen Widerstand gegen axiale Verschiebungen sind die senkrecht zur Längsachse des Pfostenteils stehenden Flanken besonders großflächig ausgeführt. Damit an dem Pfostenteil besonders viele derartige Gewindeflanken angeordnet werden können, ist das Verhältnis der Flankentiefe zur Flankenhöhe in bevorzugter Ausführung größer als zwei. Die Flankentiefe ist dabei als die halbe Differenz des Außendurchmessers zum Kern- bzw. Innendurchmesser definiert und beschreibt somit, wie lang sich die Gewindeflanke vom Innenkörper des Pfostenteils aus erstreckt. Die Flankenhöhe beschreibt demgegenüber die Höhe der Stirnseite des Gewindes in Längsrichtung des Pfostenteils und gibt bei senkrecht zur Längsachse stehenden Gewindeflanken den Abstand der koronalen und apikalen Gewindeflanken voneinander und somit die Dicke des Gewindeprofils an. Damit wird ein besonders guter Kompromiss zwischen besonders vielen und großflächigen Gewindeflanken einerseits und stabilen und bruchsicheren Gewindeflanken andererseits erreicht.

Für eine optimale Anpassung an wechselnde und unterschiedliche Knochenstärken und Knochenmaterial im Kieferbereich sind die Gewindeparameter, wie z. B. der Flankenwinkel, die Flankentiefe, die Flankenhöhe und auch die Ganghöhe, in vorteilhafter Ausgestaltung abschnittsweise entlang des Pfostenteils unterschiedlich ausgeführt. Dabei ist insbesondere denkbar, dass in koronaler Richtung eine Art Mikrogewinde verwendet wird, während in apikaler Richtung insbesondere größere Ganghöhen vorgesehen sein könnten. Ebenfalls ist eine (beispielsweise lineare, abnehmende) Variation der Flankentiefen von Gewindegang zu Gewindegang in apikaler Richtung möglich. Durch die Verwendung eines Mikrogewindes am koronalen Ende des Pfostenteils kann dabei nämlich der initiale und dauerhafte Knochenrückgang besonders wirksam unterdrückt werden, da durch das Mikrogewinde Spannungen in der äußeren Kompakta des Kieferknochens reduziert werden können.

Wie sich völlig überraschend herausgestellt hat, ist eine für das Einwachsen der Knochensubstanz besonders geeignete und günstige Gewindeform erreichbar, indem das Gewinde zumindest segmentweise eine gewisse Torsion innerhalb der den Gewindezug bildenden Basisfläche aufweist. Diese Torsion kann beschrieben werden durch die Änderung, mit der sich der Winkel der Oberflächennormale der Basisfläche zur Längsrichtung (parallel zur Mittelachse) des Pfostenteils abhängig vom Abstand zur Mittelachse des Pfostenteils ändert. Im Bodenbereich des Gewindezugs, also wo dieser an den Grundkörper angeformt ist, bildet die Oberflächennormale dabei einen ersten Winkel α₁ mit der Längsrichtung des Pfostenteils. An der äußeren Kante des Gewindezugs bildet die Oberflächennormale 52 hingegen einen zweiten Winkel α₂ mit der Längsrichtung des Pfostenteil. Infolge der Torsion ist dieser Winkel α₂ anders, insbesondere kleiner, als der basale Winkel α₁. Vorteilhafterweise beträgt die Änderungsrate dabei mindestens 5 °/mm, vorzugsweise mindestens 10 °/mm, besonders bevorzugt mindestens 15 °/mm.

Zwischen dem Aufbauteil und dem Pfostenteil ist in vorteilhafter Ausgestaltung eine zervikale Furche vorgesehen, die sich bei eingesetzten Dentalimplantaten im Bereich des Zahnfleisches befindet. Durch eine derartige zervikale Furche bzw. Zahnfleischrille kann das Risiko, dass Bakterien in den Bereich des Gewindes eindringen, minimiert werden. In apikaler Richtung an die zervikale Furche schließt der Gewindebereich des Pfostenteils in der Art eines Plattformswitchings an.

Das Aufbauteil ist vorteilhafterweise dazu ausgelegt, ein Zahnersatzstück aufzunehmen. Ein derartiges Zahnersatzstück wird üblicherweise auf das Aufbauteil gesetzt und unter Verwendung von Zement befestigt. Zur Vermeidung eines Austritts von überschüssigem Zement sind im Aufbauteil in bevorzugter Ausführung Zementtaschen vorgesehen, die sich in axialer Richtung erstrecken. Diese Zementtaschen können dabei nicht nur den überschüssigen Zement aufnehmen, sie sorgen darüber hinaus auch durch die Ausführung der Zementtaschen in Form von Furchen oder Ausnehmungen für eine Oberflächenvergrößerung des Aufbauteils. Dadurch wird ein besonders guter Halt des Zements und somit auch des Zahnersatzstückes am Aufbauteil ermöglicht.

Die Längsachse des Aufbauteils ist im Vergleich zur Längsachse des Pfostenteils in vorteilhafter Ausführung um etwa 15° geneigt. Eine derartige Neigung des Aufbauteils ermöglicht zum einen weiterhin ein einfaches Einschrauben des Dentalimplantats auch an für den behandelnden Arzt nur schwer zugänglichen Stellen im Mundraum, ohne dass Nachbarzähne oder Nachbarimplantate störend einwirken oder sogar beschädigt werden, und zum anderen eine besonders einfache Befestigung bzw. Ausrichtung des Zahnersatzstückes.

Sowohl für ein besonders einfaches Eindrehen des Dentalimplantats durch ein externes, dem Aufbauteil zugeordnetes Werkzeug, als auch für einen rotationssicheren Sitz des Zahnersatzstückes auf dem Aufbauteil ist dieses im Querschnitt sechseckig bzw. in Form eines Sechskants ausgebildet. Durch die Ausbildung als Sechskant kann darüber hinaus beim Einbringen des Dentalimplantats in den Kieferknochen bereits die Ausrichtung des Zahnersatzstückes bestimmt werden, da dieses durch die Sechskantform nur alle 60° positioniert werden kann.

Für einen formschlüssigen Abschluss des Aufbauteils und des zugeordneten Zahnersatzstückes und somit auch für eine Minimierung der Keim- bzw. Bakterienbelastung zwischen Aufbauteil und Zahnersatzstück ist das Aufbauteil zumindest teilweise konisch ausgeführt.

Die mit der Erfindung erzielten Vorteile bestehen insbesondere darin, dass durch den Flankenwinkel von etwa 90° zur Längsachse des Pfostenteils ein besonders hoher Widerstand für Bewegungen in axialer Richtung erreicht werden kann. Dadurch kann das Dentalimplantat auch bereits nach kurzer Einheilphase besonders stabil und verrutschsicher im Kieferknochen eingesetzt werden.

Ein Ausführungsbeispiel der Erfindung wird anhand einer Zeichnung näher erläutert. Darin zeigen:
- FIG. 1: ein Dentalimplantat in Seitenansicht,
- FIG. 2: einen vergrößerten Ausschnitt aus FIG. 1,
- FIG. 3: ein Segment des Dentalimplantats gem. FIG. 1 im Schnitt,
- FIG. 4: den Gewindegang des Dentalimplantats gem. FIG. 1 in perspektivischer Ansicht,
- FIG. 5: einen Ausschnitt des Dentalimplantats gem. FIG. 1 in perspektivischer Ansicht,
- FIG. 6: das Dentalimplantat gem. FIG. 1 in teilweise geschnittener Ansicht,
- FIG. 7: eine ausschnittsweise Vergrößerung von FIG. 6,
- FIG. 8: das Dentalimplantat gem. FIG. 6 im Querschnitt,
- FIG. 9: ein alternatives Dentalimplantat in Seitenansicht,
- FIG. 10: einen vergrößerten Ausschnitt aus FIG. 9, und
- FIG. 11: das Dentalimplantat gem. FIG. 9 in Draufsicht.

Gleiche Teile sind in allen Figuren mit denselben Bezugszeichen versehen. Die vorliegende Erfindung wir dabei nachstehend und in den Figuren anhand eines Dentalimplantats 1 erläutert. Im Wesen betrifft die Erfindung jedoch die spezifische Ausgestaltung des Implantatgewindes, das für eine besonders günstige Einbringbarkeit und Integration in die Knochensubstanz ausgelegt ist. In analoger Weise zur Ausgestaltung in den Ausführungsbeispielen kann somit anstelle des Dentalimplantats 1 auch ein zur anderweitigen Verwendung vorgesehenes und ausgelegtes Implantat, beispielsweise ein Hüftimplantat oder ein anderweitiges Knochenimplantat, vorgesehen sein.

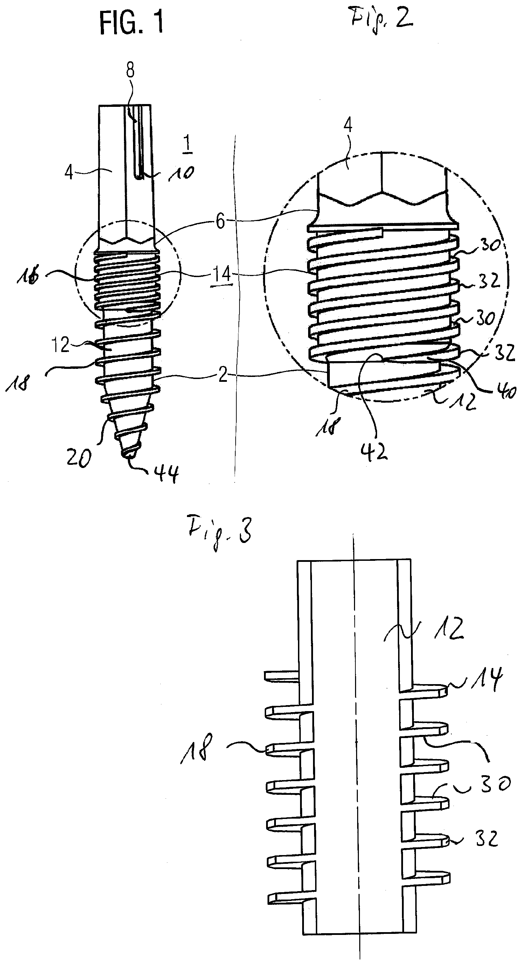

Das Dentalimplantat 1 nach FIG. 1 umfasst am apikalen Ende ein zur Einbringung in die Knochensubstanz, also insbesondere den Kieferknochen, vorgesehenes Pfostenteil 2 und am koronalen Ende ein Aufbauteil 4, das im Ausführungsbeispiel zur Aufnahme eines nicht dargestellten Zahnersatzstückes vorgesehen ist. Das dargestellte Dentalimplantat 1 ist dabei einteilig ausgebildet, so dass Pfostenteil 2 und Aufbauteil 4 einen gemeinsamen Implantatkörper bilden. Alternativ kann das Dentalimplantat 1 aber durchaus auch zweiteilig ausgeführt sein, wobei Pfostenteil 2 und Aufbauteil 4 als getrennte Ausgangskomponenten vorliegen, die außerhalb des Patientenmundes oder bereits nach dem Einbringen des Pfostenteils in den Kieferknochen miteinander verbunden werden. Das dargestellte Dentalimplantat 1 ist aus Titan Grad 4 hergestellt und im Bereich des Aufbauteils 4 frei von Zirkonoxid und poliert, da dieses in zumindest teilweisem Kontakt mit der Schleimhaut des Patienten steht. Allerdings sind auch andere gängige Materialien, die im Dentalbereich üblich sind, denkbar.

Im Übergangsbereich zwischen Pfostenteil 2 und Aufbauteil 4 ist eine zervikale Furche 6 angeordnet, die beim Einsetzen des Dentalimplantats 1 in den Kieferknochen in Höhe der Trennlinie zwischen Knochen und Zahnfleisch positioniert werden sollte. Die zervikale Furche 6 trennt somit strukturell das Pfostenteil 2 vom Aufbauteil 4. Das Aufbauteil 4 kann dabei in seiner lateralen Ausdehnung in seinem Querschnitt geringer oder kleiner dimensioniert sein als das Pfostenteil, so dass sich in der Art eines so genannten "Plattformswitchings" ein zurückspringender Absatz zwischen Aufbauteil 4 und Pfostenteil 2 bildet, der die Integration in das auf der Knochensubstanz befindliche Weichgewebe begünstigt. In der zervikalen Furche 6, die auch als Zahnfleischrille bezeichnet werden kann, sitzt daher im eingesetzten Zustand des Dentalimplantats die Schleimhaut des Patienten. Durch dieses Eindringen der Schleimhaut in die zervikale Furche 6 wird das Pfostenteil 2 in koronaler Richtung quasi abgedichtet, und das Risiko, dass Bakterien eindringen könnten, wird somit minimiert. Zusätzlich begünstigt diese Furche 6 im Bereich der Implantatsschulter eine reizarme oder -lose Ein- und Anlagerung der Schleimhaut des Zahnfleischraumes.

Die zervikale Furche 6 geht in koronaler Richtung in das Aufbauteil 4 über. Dieses Aufbauteil 4 ist im Querschnitt sechskantförmig ausgebildet, damit zum einen ein einfaches Einbringen des Dentalimplantats 1 durch ein an die Querschnittsform des Aufbauteils 4 angepasstes, externes Werkzeug und zum anderen ein rotationsfreier Sitz des an das Aufbauteil 4 anbringbaren Zahnersatzstückes ermöglicht wird. Darüber hinaus umfasst das Aufbauteil eine Anzahl von Zementtaschen 8, die in axialer Richtung erstreckt ausgeführt an einigen oder allen den Sechskant bildenden Teilflächen angeordnet sind. Durch die Zementtaschen 8 wird dem Umstand Rechnung getragen, dass beim Anbringen des Zahnersatzstückes an das Aufbauteil 4 üblicherweise Zement verwendet wird und somit die Gefahr besteht, dass überschüssiger Zement im Bereich der Schleimhaut austritt und in die Mundhöhle des Patienten gelangt. Durch die vorgesehenen Zementtaschen 8 kann überschüssiger Zement von diesen aufgenommen werden.

In einer als eigenständig erfinderisch angesehenen Ausführungsform sind die Zementtaschen 8 an ihrem apikalen oder unteren Ende 10 flach auslaufend ausgeführt, wobei im Kantenbereich der Taschenboden bevorzugt stetig und ohne Sprung in die jeweilige äußere Teilfläche des Sechskants übergeht. Die solchermaßen ausgeführten, beispielsweise durch Fräsen mit einem Scheibenfräser herstellbaren Zementtaschen 8 bieten damit den als eigenständig erfinderisch angesehenen Vorteil, dass sich der Zement bedarfsweise leicht an die äußere Oberfläche bringen lässt, ohne sich in der Zementtasche 8 zu stauen. Die Zementtaschen 8 sorgen allerdings darüber hinaus im Rahmen einer Doppelfunktion über einen besonders sicheren Halt des Zahnersatzstückes am Aufbauteil 4. Durch die Zementtaschen 8 wird dabei nämlich die Oberfläche des Aufbauteils 4 vergrößert, wodurch mehr Kontakt des Zements mit dem Aufbauteil 4 und somit eine bessere Haftwirkung ermöglicht wird.

Das Pfostenteil 2 umfasst ein an einem Grundkörper 12 angeordnetes und um diesen umlaufendes selbstschneidendes und selbstzentrierendes Gewinde 14, welches mehrere in Längsrichtung des Pfostenteils 2 gesehen aufeinanderfolgende Gewindeabschnitte 16, 18, 20 mit unterschiedlichen Gewindeparametern umfasst.

Der in koronaler Richtung gesehen erste und somit direkt an die zervikale Furche 6 anschließende Gewindeabschnitt 16, in dessen Raumbereich der Grundkörper 12 eine im Wesentlichen zylindrische Gestalt aufweist, ist als zweigängiges Mikrogewinde ausgeführt. Wie insbesondere im vergrößerten Ausschnitt aus FIG. 1 gemäß FIG. 2 erkennbar ist, ist dieses Mikrogewinde in Form eines so genannten Flachgewindes ausgebildet. Dabei sind die Gewindeparameter derart bemessen, dass der Gewindezug einen im Wesentlichen rechteckigen Querschnitt mit übereinstimmender Flankenhöhe und Flankentiefe, also einen im Wesentlichen quadratischen Querschnitt, bildet. Die Flankentiefe ist dabei als die halbe Differenz des Außendurchmessers zum Kern- bzw. Innendurchmesser definiert und beschreibt somit, wie lang sich die Gewindeflanke 30 von der Oberfläche des Grundkörpers 12 des Pfostenteils 2 nach außen hin erstreckt; sie gibt somit die Breite der Gewindeflanke 30 an. Die Flankenhöhe beschreibt demgegenüber die Höhe der Stirnseite 32 des Gewindes 14 in Längsrichtung des Pfostenteils 2 und gibt bei senkrecht zur Längsachse stehenden Gewindeflanken 30 den Abstand der koronalen und apikalen Gewindeflanken 30 voneinander und somit die Dicke des Gewindeprofils an.

Die Ganghöhe des Gewindeabschnitts 16 ist im Ausführungsbeispiel bewusst klein gehalten worden, um eine möglichst günstige Anpassung an das Knochenmaterial und somit eine möglichst gute Stabilität und ein schnelles Einwachsen des Dentalimplantats 1 zu ermöglichen. Der erste Gewindeabschnitt 16, d. h. der Bereich des Mikrogewindes, erstreckt sich etwa über ein Viertel der Länge des Pfostenteils 2. Für übliche Dentalimplantate bedeutet dies, dass bei einer Länge des Pfostenteils 2 von etwa 7 mm eine günstige Länge des Mikrogewindes von etwa 1,5 mm wäre, dementsprechend bei 9 mm etwa 2 mm, bei 11 mm etwa 3 mm, und bei einer Länge des Pfostenteils 2 von etwa 13 mm wäre das Mikrogewinde ebenfalls etwa 3 mm lang.

Das Mikrogewinde ist zweigängig ausgeführt, geht in apikaler Richtung gesehen aber in den eingängig ausgeführten zweiten Gewindeabschnitt 18 über. Einer der Gewindegänge des Mikrogewindes endet somit an dem in FIG. 2 im vergrößerten Ausschnitt dargestellten Ende 40. Dieses ist in einer an sich ebenfalls als eigenständig erfinderisch angesehene Ausführung scharfkantig und spitz zulaufend ausgeführt, so dass sich im Endbereich eine Schneidkante 42 bildet. Durch diese die Schneidkante 42 bildende Abflachung ist erreicht, dass sich die Knochensubstanz beim Eindrehen des Pfostenteils 2 nicht staut und damit das Eindrehen behindert.

Der zweite Gewindeabschnitt 18 weist eine im Vergleich zum ersten Gewindeabschnitt 16 gleiche Ganghöhe auf. Da aber das Gewinde 14 in diesem Bereich lediglich eingängig ausgeführt ist, sind benachbarte Gewindezüge doppelt so weit voneinander beabstandet wie im ersten Gewindeabschnitt 16. Darüber hinaus ist der Querschnitt des Grundkörpers 12, der in diesem Bereich ebenfalls zylindrische Grundform aufweist, in diesem Bereich im Vergleich zum ersten Gewindeabschnitt verkleinert ausgeführt. Der Außendurchmesser bleibt dabei jedoch unverändert, was dazu führt, dass das Verhältnis der Flankentiefe zu der Flankenhöhe nicht mehr etwa 1:1 ist, wie dies bei dem Flachgewinde im ersten Gewindeabschnitt 16 der Fall ist. Vielmehr ist in diesem Gewindeabschnitt 18 das Gewinde 14 für eine besonders gute Osseointegration bei hoher Primärstabilität ausgeführt, indem das Verhältnis der Flankentiefe zu der Flankenhöhe deutlich größer als 1, bevorzugt mindestens 1,5, im Ausführungsbeispiel etwa 2 oder größer ist. Das Gewinde 14 ist im zweiten Gewindeabschnitt 18 somit nicht als Flachgewinde, sondern als so genanntes "Tellergewinde" ausgeführt. Ein Tellergewinde im hier verwendeten Sinne ähnelt dabei in der geometrischen Grundform zwar einem Flachgewinde und weist wie dieses zwei im Wesentlichen parallel zueinander verlaufende Gewindeflanken 30 auf, verfügt aber über ein deutlich erhöhtes Verhältnis der Flankentiefe zur Flankenhöhe. Die grundsätzlichen geometrischen Verhältnisse sind schematisch im ausschnittsweisen Längsschnitt in FIG. 3 gezeigt.

Im Bereich des dritten Gewindeabschnitts 20, der am apikalen Ende des Pfostenteils 2 angeordnet ist, verjüngt sich der Grundkörper 12 wie in FIG. 1 ersichtlich zum freien Ende hin unter Bildung einer Spitze 44. Der Grundköper 12 des Pfostenteils 2 weist somit insgesamt eine torpedoförmige Gestalt auf. In diesem Bereich des sich verjüngenden Grundkörpers 12 umläuft diesen der dritte Gewindeabschnitt 20, wobei die Flankentiefe bedarfsabhängig mit zunehmender Annäherung an die Spitze 44 von Gewindegang zu Gewindegang reduziert werden kann. Je nach Ausführungsform kann diese Reduzierung der Flankentiefe beispielsweise weitgehend linear erfolgen, so dass das Tellergewinde wieder in ein Flachgewinde übergeht.

Sowohl das Flachgewinde im ersten Gewindeabschnitt 16 als auch das Tellergewinde im zweiten Gewindeabschnitt weisen eine koronale Gewindeflanke 30 auf, die im Wesentlichen senkrecht zur Längsachse des Pfostenteils 2 steht. Im Falle des Flachgewindes und des Tellergewindes stehen auch die apikalen Gewindeflanken 30 senkrecht zur Längsachse des Pfostenteils 2. Allerdings ist auch denkbar, dass die apikalen Gewindeflanken 30 einen anderen Winkel mit der Längsachse bilden, so dass eine Art Sägezahngewinde verwendet wird.

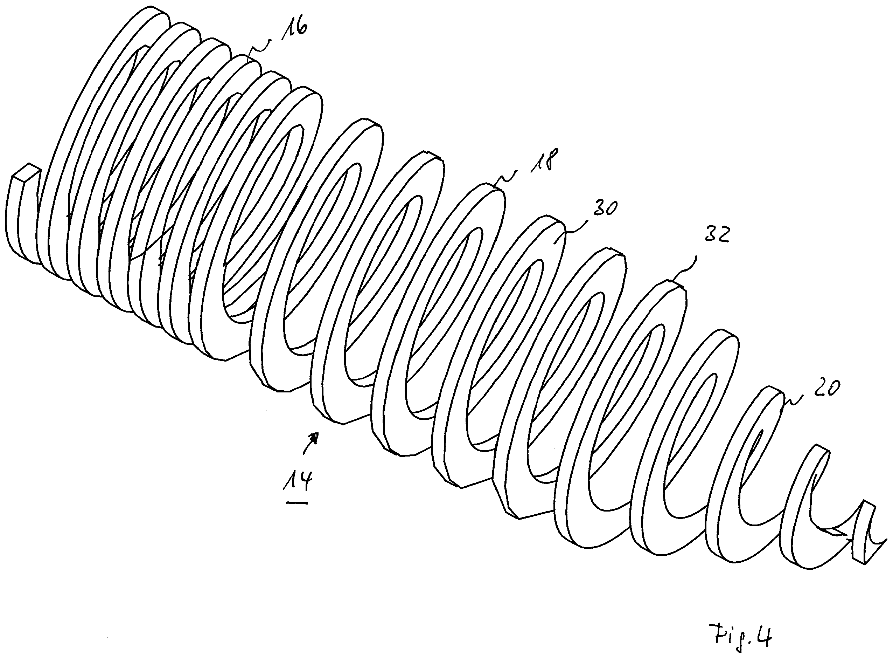

Der Verlauf des Gewindes 14 insgesamt, also unter Bildung der Gewindeabschnitte 16, 18, 20, ist gezielt für eine besonders harmonische Einleitung von Kräften in die umgebende Knochensubstanz ausgelegt, um diese nach der Inserierung des Pfostenteils 2, also nach Einschrauben des mit dem Gewinde 14 versehenen Grundkörpers, möglichst geringfügig zu beanspruchen. Wie sich völlig überraschend herausgestellt hat, ist für ein derartiges in seiner Gesamtheit besonders harmonisches und gut abgestimmtes Kraftfeld eine spezifische Raumform des Gewindes 14 insgesamt besonders günstig. Diese Raumform des Gewindeganges für das Gewinde 14, der besondere erfinderische Bedeutung zukommt, ist in FIG. 4 gezeigt. Das Gewinde 14 in seiner Gesamtheit ist dabei räumlich analog zur Kontur einer Schraubenfeder gestaltet, wie sie sich bei der Vorspannung eines Blattdrahtes mit rechteckigem oder quadratischem Querschnitt zur Bildung einer Schraubenfeder ergeben würde. Insbesondere führt diese Raumform zu einer besonders gleichmäßigen Verteilung der einwirkenden Kräfte über die Längsachse des Pfostenteils 2, so dass lokale Kraftspitzen, die die Knochensubstanz in unerwünschter Weise schädigen könnten, vermieden werden.

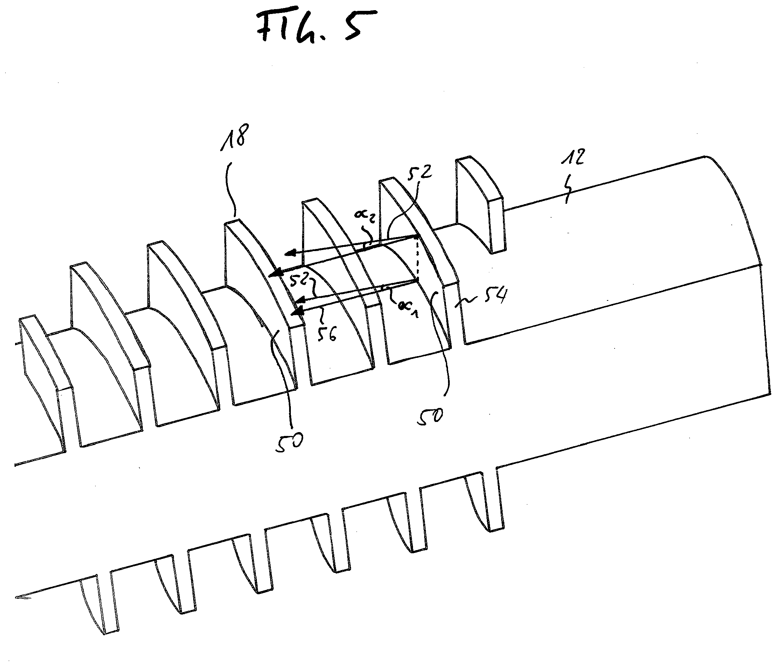

Charakteristisch für die genannte Raumform ist unter anderem, dass geometriebedingt eine gewisse Torsion innerhalb der den Gewindezug bildenden Basisfläche 50 entsteht. Diese Torsion resultiert, wie dies im vergrößerten Ausschnitt gemäß FIG. 5 gezeigt ist, in einer lokal und abhängig vom Abstand zur Zentralachse des Pfostenteils 2 variierenden Ausrichtung der Basisfläche 50, charakterisiert durch die Oberflächennormale 52. Im Bodenbereich des Gewindezugs 54, also wo dieser an den Grundkörper 12 angeformt ist, bildet die Oberflächennormale 52 - bedingt durch die Ganghöhe des Gewindes 14 - einen ersten Winkel α₁ mit der in Richtung des Pfeils 56 orientierten Längsachse des Pfostenteils 2. An der äußeren Kante des Gewindezugs 54 bildet die Oberflächennormale 52 hingegen einen zweiten Winkel α₂ mit der in Richtung des Pfeils 58 orientierten Längsachse des Pfostenteils 2. Infolge der Torsion ist dieser Winkel α₂ anders, insbesondere kleiner, als der basale Winkel α₁. Quantitativ kann diese Torsion beschrieben werden durch die Änderungsrate, mit der sich der genannte Winkel mit zunehmendem Abstand vom Grundkörper 12 ändert (unter der Voraussetzung einer linearen Abhängigkeit des Winkels vom Abstand gemäß der Beziehung: α(h) = α₁ + c*h, mit h = Abstand von der Außenoberfläche des Grundkörpers 12). Vorteilhafterweise ist die Proportionalitätskonstante mindestens 5 °/mm, vorzugsweise mindestens 10 °/mm, besonders bevorzugt mindestens 15 °/mm.

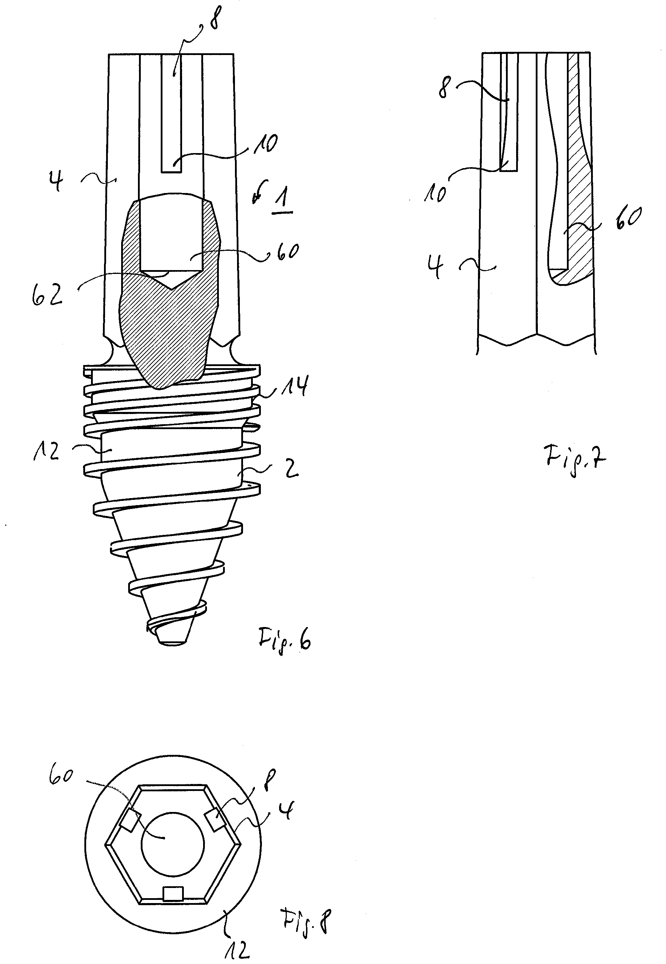

In FIG. 6 ist das Dentalimplantat 1 teilweise geschnitten dargestellt. Zur Aufnahme eines externen Werkzeuges, beispielsweise eines Schraubendrehers, zum Einbringen des Dentalimplantats 1 in den Kieferknochen ist im Aufbauteil 4 eine Schaftbohrung 60 vorgesehen, die im Wesentlichen über die komplette Länge des Aufbauteils 4 ausgeführt ist. Am apikalen Ende 62 der Schaftbohrung 60 kann diese im Querschnitt in Form eines Sechskants zur Aufnahme des Werkzeuges, beispielsweise eines Sechskant-Schraubenschlüssels, ausgebildet sein. Dadurch wird erreicht, dass das Werkzeug beim Einbringen des Dentalimplantats 1 nicht durchdreht und somit das Einbringen erschwert oder gar unmöglich macht. Die Ausführung der Zementtaschen 8 in der an ihrem apikalen oder unteren Ende 10 flach auslaufenden Bauweise wird in der vergrößerten Darstellung gem. FIG. 7 besonders deutlich. Die Schaftbohrung 60 ist in der Querschnittsdarstellung gemäß FIG. 8 erneut verdeutlicht. Ebenso sind dort drei Zementtaschen 8 eingezeichnet.

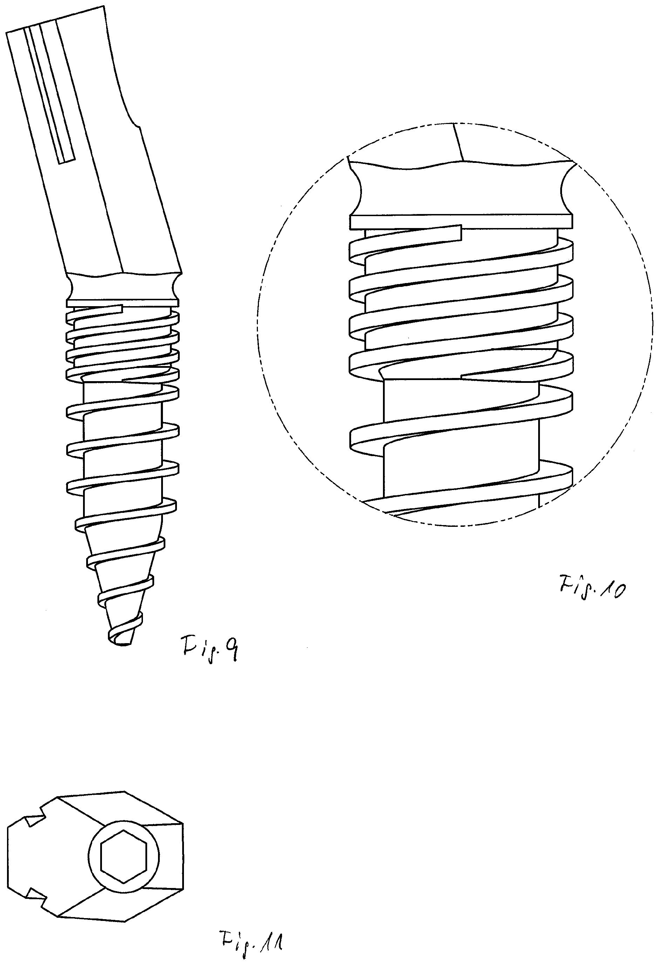

Während die Längsachsen des Aufbauteils 4 und des Pfostenteils 2 des Dentalimplantats 1 nach den FIG. 1 bis 8 noch zusammenfallen, sind diese in der alternativen Ausführungsform des Dentalimplantat 1' gemäß FIG. 9 (Ausschnittsvergrößerung in FIG. 10) um etwa 15° zueinander geneigt. Durch diese Neigung lässt sich ein derartiges Dentalimplantat 1' auch an schwer zugänglichen Stellen des Mundraumes vom behandelnden Arzt besonders einfach und genau einbringen, ohne dass das Zahnersatzstück im Vergleich zu den Nachbarzähnen schief eingesetzt werden muss. Die Neigung von etwa 15° ist dabei bewusst nicht zu hoch gewählt, da ansonsten das Eindrehen durch die Nachbarzähne erschwert werden würde, aber gerade hoch genug, dass ein Einbringen in weiten Teilen des Mundraumes möglich ist.

Zur Einbringung des geneigten Dentalimplantats 1' in den Kieferknochen wird ebenfalls ein Werkzeug verwendet, welches in eine Schaftbohrung 64 eingesetzt wird, die zwar ebenfalls innerhalb des Aufbauteils 4 angeordnet ist, aber entlang der Längsachse des Pfostenteils verläuft. Die Schaftbohrung 64 ähnelt ansonsten allerdings der bereits oben beschriebenen Schaftbohrung 60, wie dies auch in der Draufsicht auf das geneigte Dentalimplantat 1' in FIG. 11 zu sehen ist. Durch die Neigung des Dentalimplantats 1' beschreibt dessen Aufbauteil 4 beim Eindrehen einen größeren Kreis. Die Neigung ist aber, wie oben bereits erwähnt, gerade so ausgeführt, dass keine Beeinträchtigung der und durch die Nachbarzähne erfolgt.

Das Dentalimplantat 1, 1' hat im Ausführungsbeispiel eine Gesamtlänge von 19 mm, von der das Aufbauteil 4 8 mm und das Pfostenteil 2 11 mm einnimmt. Die Schaftbohrung 60 hat im koronalen Bereich einen Durchmesser von etwa 1,9 mm und erstreckt sich über etwa 8 mm, also nahezu entlang des gesamten Aufbauteils 4. Die letzten etwa 1,5 mm am apikalen Ende der Schaftbohrung 60 sind dabei sechskantförmig ausgebildet. Die Zementtaschen 8 am Aufbauteil 4 sind etwa 4 mm lang, 0,5 mm breit und 0,3 mm tief ausgeführt. Das Aufbauteil 4 hat am apikalen Ende einen Durchmesser von etwa 3 mm, der sich in koronaler Richtung konisch verkleinert. Der Winkel des Konus beträgt etwa 1°. Am apikalen Ende des Aufbauteils 4, direkt am Übergang zum Pfostenteil 2, ist eine zervikale Furche 6 vorgesehen. Die Höhe dieser Furche 6 beträgt etwa 1 mm und der Radius der zervikalen Furche 6 beträgt am apikalen Ende etwa 0,4 mm.

Bei anderen Dentalimplantatslängen können die hier genannten Abmessungen entsprechend der Gesamtlänge und dem Einsatzort angepasst werden.

### Bezugszeichenliste

- 1, 1': Dentalimplantat
- 2: Pfostenteil
- 4: Aufbauteil
- 6: zervikale Furche
- 8: Zementtaschen
- 10: Ende
- 12: Grundkörper
- 14: Gewinde
- 16, 18, 20: Gewindeabschnitt
- 30: Gewindeflanke
- 32: Stirnseite
- 40: Ende
- 42: Schneidkante
- 44: Spitze
- 50: Basisfläche
- 52: Oberflächennormale
- 54: Gewindezug
- 56,58: Pfeil
- 60,64: Schaftbohrung
- 62: Ende

## Patentansprüche

1. Implantat, insbesondere Dentalimplantat (1), mit einem in einen Knochen einbringbaren Pfostenteil (2), wobei das Pfostenteil (2) ein Gewinde (14) umfasst, **dadurch gekennzeichnet, dass** das Gewinde in zumindest einem Gewindeabschnitt (18) als Tellergewinde ausgeführt ist, bei dem mindestens eine der Gewindeflanken (30) eine Flankentiefe aufweist, die mindestens um das 1,25-fache, bevorzugt um etwas das 2-fache, größer ist als die durch die Höhe der zugeordneten Stirnfläche (32) gegebene Flankenhöhe, und bei dem die apikalseitige Gewindeflanke (30) in diesem Gewindeabschnitt (18) im Wesentlichen senkrecht zur Längsachse des Pfostenteils (2) ausgerichtet ist.

2. Implantat, insbesondere Dentalimplantat (1), nach Anspruch 1, bei dem die Basisfläche (50) des Gewindezugs im Gewindeabschnitt (18) eine Torsion in dem Sinne aufweist, dass die Oberflächennormale (52) der Basisfläche (50) im Bodenbereich des Gewindezugs (54) einen ersten Winkel (α₁) mit der Längsrichtung des Pfostenteils (2) und an der äußeren Kante des Gewindezugs (54) einen zweiten Winkel (α₂) mit der Längsrichtung des Pfostenteils (2) bildet, wobei dieser Winkel (α₂) anders ist als der basale Winkel (α₁).

3. Implantat, insbesondere Dentalimplantat (1), nach Anspruch 1 oder 2, dessen Gewinde (14) einen weiteren, als Flachgewinde ausgeführten Gewindebereich (16) aufweist.

4. Als Dentalimplantat (1) ausgeführtes Implantat nach einem der Ansprüche 1 bis 3, dessen Pfostenteil (2) ein Aufbauteil (4) zugeordnet ist, an das ein Zahnersatzstück anbringbar ist.

5. Dentalimplantat (1) nach Anspruch 4, bei dem zwischen dem Pfostenteil (2) und dem Aufbauteil (4) eine zervikale Furche (6) vorgesehen ist.

6. Dentalimplantat (1) nach Anspruch 4 oder 5, dessen Aufbauteil (4) eine Anzahl von Zementtaschen (8) umfasst.

7. Dentalimplantat (1) nach einem der Ansprüche 4 bis 6, bei dem Längsachse des Aufbauteils (4) gegenüber der Längsachse des Pfostenteils (2) um etwa 15° geneigt ist.

8. Dentalimplantat (1) nach einem der Ansprüche 4 bis 7, dessen Aufbauteil (4) im Querschnitt sechskantförmig ausgebildet ist.

9. Dentalimplantat (1) nach einem der Ansprüche 4 bis 8, dessen Aufbauteil (4) zumindest teilweise konisch ausgebildet ist.

## Claims

1. An implant, in particular a dental implant (1), with a post portion (2) which can be inserted into a bone, wherein the post portion (2) comprises a thread (14), **characterized in that** the thread is configured as a spaced thread in at least one thread section (18) in which at least one of the thread flanks (30) has a flank depth which is at least 1.25 times, preferably approximately 2 times larger than the flank height given by the height of the associated end face (32), and in which the thread flank (30) on the apical side in said thread section (18) is orientated substantially perpendicular to the longitudinal axis of the post portion (2).

2. The implant, in particular dental implant (1) as claimed in claim 1, in which the base face (50) of the thread form in the thread section (18) exhibits torsion in the sense that the normal (52) to the surface of the base face (50) in the root region of the thread form (54) forms a first angle (α₁) with the longitudinal direction of the post portion (2), and at the outer edge of the thread form (54), it forms a second angle (α₂) with the longitudinal direction of the post portion (2), wherein this angle (α₂) is different from the basal angle (α₁) .

3. The implant, in particular dental implant (1), as claimed in claim 1 or claim 2, the thread (14) of which having a further thread region (16) which is configured as a square thread.

4. An implant configured as a dental implant (1) as claimed in one of claims 1 to 3, the post portion (2) of which having an abutment (4) associated therewith, onto which a dental prosthesis can be attached.

5. The dental implant (1) as claimed in claim 4, in which a cervical groove (6) is provided between the post portion (2) and the abutment (4).

6. The dental implant (1) as claimed in claim 4 or claim 5, the abutment (4) of which comprising a plurality of cement pockets (8).

7. The dental implant (1) as claimed in one of claims 4 to 6, in which the longitudinal axis of the abutment (4) is inclined by approximately 15° with respect to the longitudinal axis of the post portion (2).

8. The dental implant (1) as claimed in one of claims 4 to 7, the abutment (4) of which being hexagonal in configuration in cross section.

9. The dental implant (1) as claimed in one of claims 4 to 8, the abutment (4) of which being tapered in configuration, at least in parts.

## Revendications

1. Implant, en particulier implant dentaire (1), comprenant une partie de montant (2) pouvant être insérée dans un os, dans lequel la partie de montant (2) comprend un filetage (14), **caractérisé en ce que** le filet est dirigé dans au moins un tronçon de filetage (18) en tant que filetage à rondelle, dans lequel au moins un des flancs de filetage (30) présente une profondeur de filet qui fait au moins 1,25, de préférence au moins 2x la hauteur de flanc fournie par la hauteur de la face avant (32) correspondante, et dans lequel le flanc de filetage (30) apical dans ce tronçon de filetage (18) est aligné essentiellement verticalement à l'axe longitudinal de la partie de montant (2).

2. Implant, en particulier implant dentaire (1) selon la revendication 1, dans lequel la surface de base (50) du filet dans le tronçon de filetage (18) présente une torsion au sens où la normale de surface (52) de la surface de base (50) forme dans le fond du filet (54), un premier angle (α₁) avec le sens longitudinal de la partie de montant (2) et sur le bord extérieur du filet (54), un second angle (α₂) avec la direction longitudinale de la partie de montant (2), dans lequel cet angle (α₂) est différent de l'angle (α₁) basal.

3. Implant, en particulier implant dentaire (1) selon la revendication 1 ou 2, dont le filetage (14) présente une autre zone de filetage (16) conçue en tant filetage plat.

4. Implant, conçu en tant qu'implant dentaire (1) selon l'une des revendications 1 à 3, dont la partie de montant (2) a une pièce de montage (4) correspondante, sur laquelle une pièce de remplacement de dent peut être placée.

5. Implant dentaire (1) selon la revendication 4, dans lequel un sillon cervical (6) est prévue entre la partie de montant (2) et la pièce de montage (4).

6. Implant dentaire (1) selon la revendication 4 ou 5, dans lequel la pièce de montage (4) comprend un nombre de poches de ciment (8).

7. Implant, conçu en tant qu'implant dentaire (1) selon l'une des revendications 4 à 6, dans lequel l'axe longitudinal de la pièce de montage (4) est inclinée par rapport à l'axe longitudinal de la partie de montant (2) d'environ 15°.

8. Implant, conçu en tant qu'implant dentaire (1) selon l'une des revendications 4 à 7, dont la partie de montage (4) est hexagonale en section.

9. Implant, conçu en tant qu'implant dentaire (1) selon l'une des revendications 4 à 8, dont la partie de montage (4) est au moins partiellement conique.
